# EUROPÄISCHE PATENTANMELDUNG

(11) **EP 1 479 562 A2**
(43) Veröffentlichungstag der Anmeldung: **24.11.2004**
(21) Anmeldenummer: 04010416.8
(22) Anmeldetag: 03.05.2004
(51) Int. Cl.: B60P 7/08

(54) **Fahrzeug zum Transport von Gütern und Vorrichtung zur Sicherung von Ladung**

(30) Priorität: 19.05.2003 DE 10322827
(71) Anmelder: AutoLOAD-Systems GmbH & Co. KG, 86165 Augsburg (DE)
(72) Erfinder: Paul, Michael, 73035 Göppingen (DE); Weber, Helmut, 75391 Gechingen (DE)
(74) Vertreter: Dreiss, Fuhlendorf, Steimle & Becker

(57) **Zusammenfassung**

Es wird ein Fahrzeug zum Transportieren von Gütern vorgestellt, welches Vorrichtungen zur Sicherung der Ladung gegen Rutschen und Kippen aufweist.

## Beschreibung

Die Erfindung betrifft ein Fahrzeug zum Transport von Gütern, insbesondere Trailer für Zugmaschinen und LKWs mit einer Ladefläche zum Transport von Gütern. Im Zusammenhang mit der Erfindung wird nachfolgend stets von Fahrzeugen gesprochen, wobei von diesem Begriff sowohl Trailer als auch LKWs mit einem Boden beziehungsweise einer Ladefläche zum Transport von Waren umfasst sind.

Die Bremsleistungen moderner LKWs sind in den letzten Jahren, unter anderem durch den Einsatz moderner Scheibenbremsanlagen, stark angestiegen. Infolgedessen besteht eine erhöhte Notwendigkeit, die Ladung rutschsicher auf dem Boden des Fahrzeugs zu befestigen. Zusätzlich zu der geforderten Rutschsicherheit ist es auch notwendig, die Ladung, sofern sie einen relativ hohen Schwerpunkt hat, gegen Kippen zu sichern, um im Fall einer Vollbremsung oder bei einer Kurvenfahrt mit hoher Querbeschleunigung ein Kippen der Ladung zu verhindern.

Zu diesem Zweck ist es bereits bekannt, auf den Boden des Fahrzeugs, der als Ladefläche genutzt wird, sogenannte Anti-Rutsch-Matten aufzulegen und die zu transportierende Ladung auf diese Anti-Rutsch-Matten zu stellen. Diese Anti-Rutsch-Matten haben den Effekt, dass der Haftreibungskoeffizient µ zwischen Boden und zu sicherndem Transportgut Werte bis 0,9 µ und mehr annimmt. Damit ist der Haftreibungskoeffizient zwischen Boden und zu sichernder Ladung größer als die maximale, bei einer Vollbremsung des Fahrzeugs erreichbare Verzögerung und infolgedessen ist die Ladung zuverlässig gegen Rutschen gesichert. Nachteilig an dieser Lösung ist, dass bei jedem Beladevorgang die Anti-Rutsch-Matten von Hand auf den Boden gelegt werden müssen und zwar genau dort, wo später die Ladung abgesetzt werden wird. Dies erfordert einen erheblichen Zeitaufwand und wird unter anderem deswegen in der Praxis oft nicht mit der gebotenen Sorgfalt durchgeführt.

Außerdem bietet diese aus dem Stand der Technik bekannte Lösung keine Sicherheit gegen das Kippen der zu transportierenden Ladung.
Der Erfindung liegt die Aufgabe zugrunde, ein Fahrzeug zum Gütertransport bereitzustellen, dessen Ladung besser gegen Verrutschen und Kippen gesichert ist und bei dem der Aufwand an Personal und Zeit für das ordnungsgemäße Sichern der Ladung minimiert wird, um die Wirtschaftlichkeit des Gütertransports nicht zu beeinträchtigen. Außerdem soll dadurch erreicht werden, dass das Personal die Ladung auch unter dem im Alltag häufig vorkommenden Zeitdruck ausreichend sichert.

Diese Aufgabe wird bei einem Fahrzeug und einem LKW zum Gütertransport mit einem Boden dadurch gelöst, dass eine Anti-Rutsch-Matte vorgesehen ist, die auf eine Rolle aufwickelbar ist und bei dem Mittel zum Abrollen der Anti-Rutsch-Matte auf dem Boden des Fahrzeugs vorgesehen sind.

Dadurch, dass die Anti-Rutsch-Matte auf eine Rolle aufwickelbar ist, kann sie nach dem Entladen des Fahrzeugs einfach und schnell vom Boden des Fahrzeugs entfernt werden, falls sie nicht mehr benötigt wird. Damit ist gewährleistet, dass die Anti-Rutsch-Matte eine längere Lebensdauer erreicht und nur dann eingesetzt wird, wenn sie auch tatsächlich benötigt wird.

Durch die erfindungsgemäß vorgesehenen Mittel zum Abrollen der Anti-Rutsch-Matte kann diese auf einfache Weise auf dem Boden des Fahrzeugs verlegt werden, so dass das Fahrzeug erneut beladen werden kann.

Es hat sich als vorteilhaft erwiesen, wenn die Rolle am Heck des Fahrzeugs angeordnet ist und/oder die Rolle mit einem Reibrad gekoppelt ist, welches gegen eine Antriebswalze gepresst wird. Dadurch ist es möglich, die Anti-Rutsch-Matte mit Hilfe der Antriebswalze, in der ein vorzugsweise elektrisch angetriebener Motor vorgesehen ist, vollautomatisch und ohne den Einsatz von Personal aufzuwickeln.

Es hat sich weiter als vorteilhaft erwiesen, wenn die Rolle und das Reibrad an einem Schwenkhebel drehbar befestigt sind und der Schwenkhebel um eine Achse schwenkbar ist.

Bei dieser Konstellation ist es besonders vorteilhaft, wenn das Reibrad durch eine Spannfeder gegen die Antriebswalze gepresst wird, so dass durch ein Ändern der Vorspannung der Spannfeder das von der Antriebswalze auf das Reibrad übertragbare Drehmoment eingestellt werden kann. Außerdem wirken sich Unrundheiten sowohl des Reibrads als auch der Antriebswalze nicht oder nur in geringem Umfang auf die Funktion der Rolle beim Aufwickeln der Anti-Rutsch-Matte aus.

Bei einer vorteilhaften Ausgestaltung der Erfindung stützt sich die Spannfeder einenends gegen einen Schwenkhebel und anderenends gegen einen Zugstab ab.

Um eine weiter verbesserte Sicherung der Ladung gegen Verrutschen zu erreichen, können mehrere angeordnete Anti-Rutsch-Matten nebeneinander angeordnet sein, die bevorzugt über die gesamte Breite des Bodens verteilt sind und die durch eine Traverse miteinander gekoppelt sind. Dadurch wird erstens erreicht, dass über die gesamte Breite des Bodens Anti-Rutsch-Matte vorhanden sind, ohne den gesamten Wagenboden mit Anti-Rutsch-Matte zu belegen. Dadurch werden erhebliche Kosten eingespart und die Handhabung der Anti-Rutsch-Matten wird erleichtert. Wenn die Anti-Rutsch-Matten durch eine Traverse miteinander gekoppelt sind, genügt es zum Abrollen der Anti-Rutsch-Matte von der Rolle, die Traverse vom Heck des Fahrzeugs bis zur vorderen Stirnwand zu ziehen oder zu schieben, um über den gesamten Wagenboden mehrere Streifen von Anti-Rutsch-Matten zu verteilen.

Dadurch wird der Zeitaufwand für das Auslegen der Anti-Rutsch-Matten gering gehalten.

Beispielsweise kann der Fahrer die Traverse vom Heck bis zum vorderen Ende des Bodens ziehen, und gleichzeitig mehrere Streifen von Anti-Rutsch-Matten auf dem Boden des Fahrzeugs auszulegen. Alternativ kann das Auslegen der Anti-Rutsch-Matten auch dadurch erfolgen, dass beim Beladen des Fahrzeugs, wenn nämlich die zu transportierende Ware vom Heck des Fahrzeug in Richtung der Stirnwand bewegt wird, die Traverse von der zu transportierenden Ware oder den Fördermitteln, mit deren Hilfe die zu transportierende Ware in das Fahrzeug gefahren wird, mitgenommen wird und dadurch die Anti-Rutsch-Matte abgewickelt wird. Dieses Vorgehen ist besonders vorteilhaft, wenn in den Boden mindestens eine Hubschiene mit einer anhebbaren Tragplatte eingelassen ist, auf der Rollkörper - oft auch als "Skates" bezeichnet, abrollen können. In diesem Fall können die Rollkörper in angehobenem Zustand der Tragplatte die Ladung in den Fahrzeug transportieren und gleichzeitig die Traverse, an der die Anti-Rutsch-Matten befestigt sind, mitnehmen. In abgesenktem Zustand der Tragplatte können die Rollkörper unter der Ladung hindurch aus dem Fahrzeug herausgezogen werden.

Um das Abwickeln der mindestens einen Anti-Rutsch-Matte zu erleichtern, hat es sich als vorteilhaft erwiesen, wenn im Boden des Fahrzeugs, insbesondere an der Heckkante des Bodens eine Ablaufrolle vorgesehen ist, über die die Anti-Rutsch-Matte abgewickelt werden kann. Dadurch wird die zum Abwickeln der Anti-Rutsch-Matte erforderliche Kraft deutlich verringert und der Verschleiß der Anti-Rutsch-Matte verringert.

Die eingangs genannte Aufgabe wird erfindungsgemäß ebenfalls bei einem Fahrzeug mit einem Boden, mit einem Dach, wobei in dem Dach auf jeder Seite mindestens eine Schiene zur Aufnahme einer Plane vorgesehen ist, und mit Rungen, wobei die Rungen das Dach und den Boden verbinden, dadurch gelöst, dass in den Rungen mindestens eine Ausnehmung vorhanden ist, dass an der Plane mindestens ein Haken befestigt ist, und dass der mindestens eine Haken formschlüssig mit der mindestens einen Ausnehmung der Runge verbindbar ist.

Dadurch ist es möglich, von der an sich sehr reißfesten Plane Kräfte in die Rungen einzuleiten und somit die Krafteinleitung von der Plane in das Dach und den Boden des Fahrzeugs deutlich zu verbessern. Im Ergebnis bedeutet dies, dass eine erfindungsgemäße Ausgestaltung der Plane dem Anpressdruck durch das Ladegut einen wesentlich höheren Widerstand entgegenbringt und eine deutlich geringere Ausbeulung aufweist, so dass die zu sichernde Ware nicht seitlich über den Boden des Fahrzeugs hinausrutscht und somit auch keine Gefahr für die Umgebung des Fahrzeugs und nur eine relativ geringe Gefahr für die Fahrstabilität des Fahrzeugs besteht.

Es hat sich bei praktischen Versuchen gezeigt, dass eine erfindungsgemäß mit den Rungen verbundene Plane einer zu sichernde Ware einen wesentlich höheren Widerstand entgegenbringt.

In weiterer Ausgestaltung des erfindungsgemäßen Fahrzeugs sind an der Plane Spanngurte vorgesehen. Mit diesen Spanngurten kann die Plane in Richtung des Bodens des Fahrzeugs gespannt werden und gleichzeitig eine formschlüssige Verbindung zwischen dem mindestens einen Haken und der mindestens einen Ausnehmung in der Runge hergestellt werden. Dadurch erfolgt die formschlüssige Verbindung zwischen Plane und Runge ohne zusätzlichen Aufwand, wenn die Plane, wie üblich, mit den Spanngurten gespannt und am Boden des Fahrzeugs festgeklemmt wird.

Wenn mehrere Haken an der Plane befestigt sind, hat es sich als vorteilhaft erwiesen, die Plane dort, wo der oder die Haken befestigt sind, lokal zu versteifen, beispielsweise durch ein angeschraubtes Aluminium- oder Stahlblechprofil, um zu gewährleisten, dass alle Haken gleichzeitig formschlüssig mit der entsprechenden Ausnehmung verbunden werden oder gleichzeitig aus der Ausnehmung herausgeführt werden, um die Plane frei bewegen zu können.

Um die Haken aus den Ausnehmungen herausführen zu können, ist es vorteilhaft, wenn an der Plane eine Vorrichtung zum Anheben vorgesehen ist. Diese Vorrichtung kann beispielsweise als Handgriff oder Schlaufe, die an der Plane befestigt ist, ausgebildet sein. Auch in diesem Fall ist die Versteifung der Plane im Bereich der Haken hilfreich, da somit durch Anheben der Plane an dem Handgriff oder Schlaufe alle Haken gleichzeitig aus ihren Ausnehmungen herausgehoben werden.

Alternativ kann auch vorgesehen sein, dass die Vorrichtung zum Anheben der Plane als ein in Richtung des Daches ausgebildeter Spanngurt ausgebildet ist. Damit ist es möglich, auch lange und somit schwere Planen sicher anzuheben und somit die formschlüssige Verbindung zwischen Plane und Runge bei Bedarf zuverlässig und ohne großen Kraftaufwand lösen zu können. Wenn, wie in weiterer Ausgestaltung der Erfindung vorgesehen, im Bereich des Daches eine Umlenkung des Spanngurts erfolgt, kann das feste Ende des Spanngurts am Boden befestigt sein und somit die Plane von einer Person, die auf der Fahrbahn oder dem Parkplatz steht, angehoben werden.

Die eingangs genannte Aufgabe wird ebenfalls gelöst durch eine Vorrichtung zur Sicherung von Ladung, insbesondere gegen Kippen, mit einem Schwenkarm und mit einem Stützarm, wobei der Schwenkarm und der Stützarm an einem ersten Ende je einen Drehpunkt aufweisen, wobei der Stützarm zwischen dem Drehpunkt und einem zweiten Ende des Schwenkarms mit diesem gelenkig verbunden ist und wobei der Abstand zwischen dem Drehpunkt des Schwenkarms und dem Drehpunkt des Stützarm veränderbar und arretierbar ist.

Auf diese Weise kann der Schwenkarm so verschwenkt werden, dass er in Anlage an die zu sichernde Ladung kommt und diese somit gegen Kippen und Rutschen sichert. Durch das Verändern des Abstands zwischen dem Drehpunkt des Schwenkarms und dem Drehpunkt des Stützarms kann der Schwenkarm auf einfachste Weise an verschiedene Ladungen angelegt werden, wobei die Geometrie der Ladung nahezu beliebig sein kann.

Alternativ ist auch vorgesehen, dass die Länge des Stützarms, beispielsweise mit einer Gewindespindel, stufenlos verstellbar ist und dadurch der Schwenkarm in Anlage an das ladegut gebracht wird.

Es hat sich als vorteilhaft erwiesen, wenn der Drehpunkt des Schwenkarms und der Drehpunkt des Stützarms in je einem Führungskopf gelagert ist und die Führungsköpfe in einer Zurrschiene verschiebbar und arretierbar sind. Solche Zurrschienen sind an und für sich aus dem Stand der Technik bekannt, können jedoch im Zusammenhang mit einer erfindungsgemäßen Vorrichtung einer neuen Verwendung zugeführt werden.

Die Flexibilität und der Einsatzbereich der erfindungsgemäßen Vorrichtung kann dadurch gesteigert werden, dass mindestens eine Zurrschiene an der Stirnwand eines Fahrzeugs, einer Runge, insbesondere einer Mittelrunge, eines Fahrzeugs, einem Sperrbalken oder einer Einstecklatte befestigt ist. Dadurch ist es möglich, nahezu an jedem Punkt des Laderaums einen Schwenkarm oder mehrere Schwenkarme so zu positionieren, dass die Ladung gegen Kippen und Verrutschen gesichert wird.

Um die Ladung bestmöglich sichern zu können, ist vorgesehen, an dem dem Drehpunkt des Schwenkarms entgegengesetzten Ende ein Aufnahmestück drehbar zu befestigen, so dass sich das Aufnahmestück an die zu sichernde Ware anlegt. Insbesondere kann dieses Aufnahmestück die Form eines Kreisausschnitts haben, wenn die zu sichernde Ware eine zylindrische Form hat, wie es zum Beispiel bei großen und schweren Papierrollen der Fall ist.

Das Aufnahmestück kann auch zur Aufnahme einer Einstecklatte geeignet sein, so dass durch zwei Vorrichtungen, die an zwei benachbarten Rungen angeordnet sind, die zu sichernde Waren gegen seitliches Verrutschen gesichert werden kann.

Weitere Vorteile und vorteilhafte Ausgestaltungen der Erfindung sind der nachfolgenden Zeichnung, deren Beschreibung und den Patentansprüchen entnehmbar. Alle in der Zeichnung, den Patentansprüchen und den Ansprüchen offenbarten Merkmale können sowohl einzeln als auch in beliebiger Kombination miteinander erfindungswesentlich sein.

### Zeichnung

Es zeigen:
- Figur 1: eine Seitenansicht eines Ausführungsbeispiels eines erfindungsgemäßen Fahrzeugs,
- Figur 2: ein Detail der Seitenansicht von Figur 1,
- Figur 3: einen Schnitt durch den Boden des Fahrzeugs gemäß Figur 1,
- Figur 4: die erfindungsgemäß formschlüssige Verbindung zwischen Runge und Plane,
- Figur 5: eine erfindungsgemäße Vorrichtung zum Sichern von Ladung in verschiedenen Ansichten,
- Figur 6: eine auf einer Zurrschiene verankerte erfindungsgemäß Vorrichtung zum Sichern von Ladung, und
- Figur 7: eine Draufsicht auf drei Fahrzeuge, bei denen die Ladung mit mehreren Vorrichtungen zum Sichern von Ladung gesichert ist.

### Beschreibung der Ausführungsbeispiele

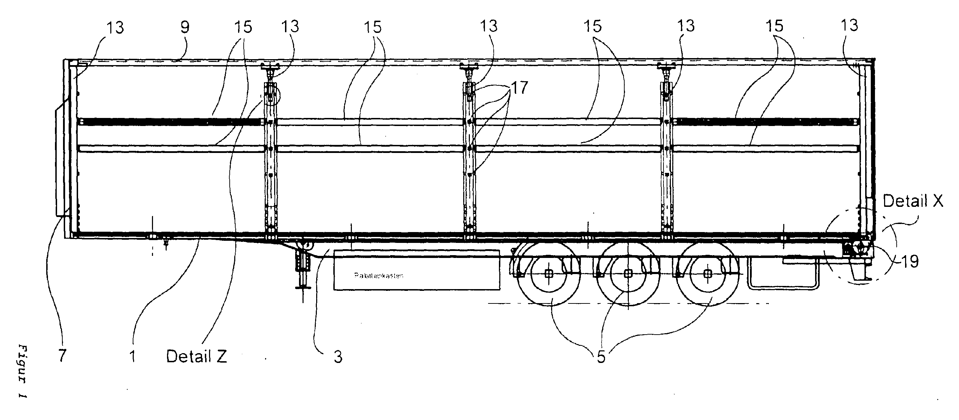

In Figur 1 ist ein Fahrzeug, welches mit den erfindungsgemäßen Vorrichtungen und Mitteln zum Sichern von Ladung ausgerüstet ist, in einer Seitenansicht dargestellt. Das erfindungsgemäße Fahrzeug ist bei diesem Ausführungsbeispiel ein Trailer mit einem Boden 1, der auf einem Rahmen 3 aufliegt. An dem Rahmen 3 sind insgesamt drei Achsen mit Rädern 5 befestigt.

Der Fahrzeug hat an seinem vorderen Ende eine Stirnwand 7 und an seinem hinteren Ende zwei Türen, die in dieser Ansicht nicht sichtbar sind. In einem Dach 9 des Fahrzeugs verlaufen zwei Schienen, von denen nur eine Schiene 11 in Figur 1 sichtbar ist. In der Schiene 11 werden drei Rungen 13 geführt. Auch an der Stirnwand 7 und am Heck des Fahrzeugs sind ebenfalls Rungen 13 (nicht sichtbar) vorhanden. Die Rungen 13 dienen einerseits dazu, das Dach 9 abzustützen. Andererseits können an sie auch in bekannter Weise Einstecklatten 15 eingehängt werden.

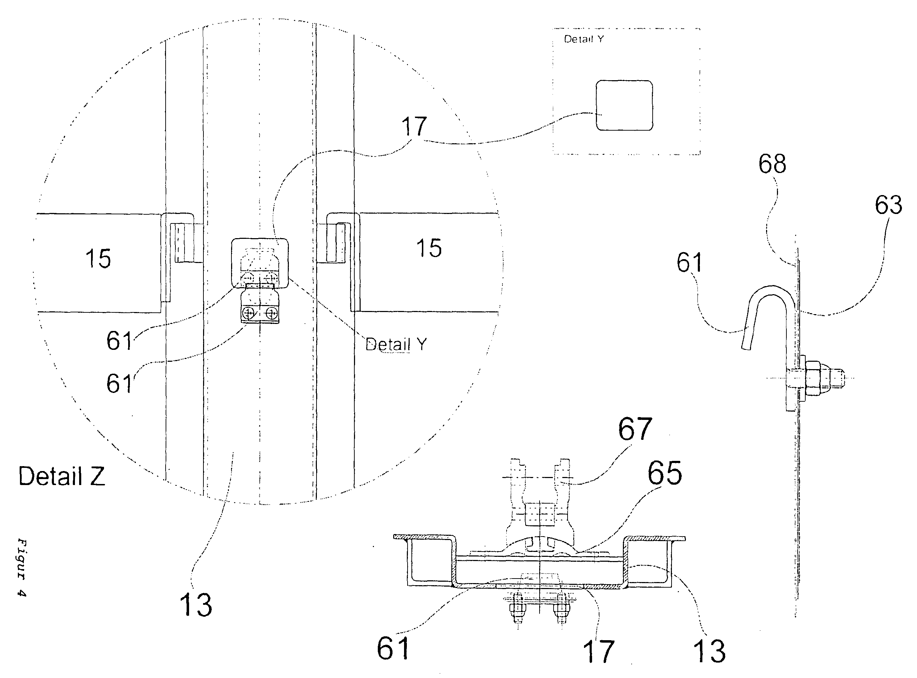

In den mittleren Rungen 13 sind vier Ausnehmungen 17 vorgesehen, die nachfolgend im Zusammenhang mit der Figur 4 noch näher erläutert werden. Aus Gründen der Übersichtlichkeit sind nur an einer der drei sichtbaren Rungen 13 die Ausnehmungen 17 mit Bezugszeichen versehen worden.

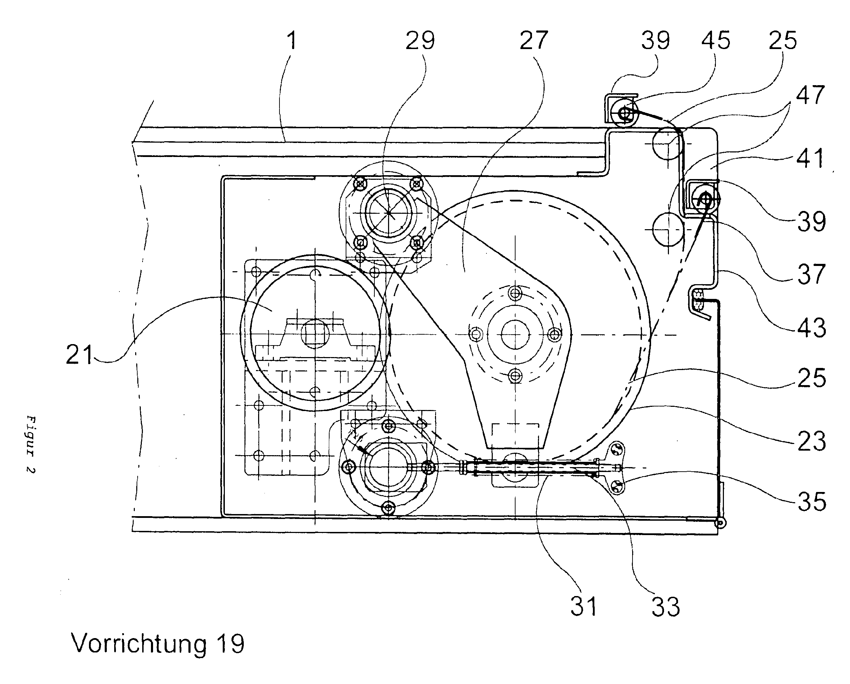

Am Heck des Fahrzeugs ist unterhalb des Bodens 1 eine Vorrichtung 19 zum Aufwickeln einer Anti-Rutsch-Matte (hier nicht erkennbar) vorhanden, die nachfolgend anhand der Figur 2 im Detail erläutert wird.

In Figur 2 zeigt das Detail x aus Figur 1 ist uns stellt eine Vorrichtung 19 zum Aufwickeln einer Anti-Rutsch-Matte dar. Aus Figur 2 ergibt sich, dass die Vorrichtung 19 unterhalb des Bodens 1 des Fahrzeugs angeordnet ist. Die Vorrichtung 19 besteht im Wesentlichen aus einer Antriebswalze 21, die ihrerseits von einem nicht dargestellten Elektromotor antreibbar ist, einem Reibrad 23, welches auf die Antriebswalze gepresst wird und einer mit dem Reibrad 23 gekoppelten Rolle (nicht sichtbar), auf die eine Anti-Rutsch-Matte 25 aufgewickelt werden kann.

Das Reibrad 23 und die mit dem Reibrad 23 gekoppelte Rolle sind an einem drehbar gelagerten Schwenkhebel 27 befestigt. Der Schwenkhebel 27 ist um eine Achse 29 drehbar. Um das Reibrad 23 gegen die Antriebswalze 21 pressen zu können, ist eine Spannfeder 31 vorgesehen, welche sich einenends gegen den Schwenkhebel 27 abstützt und anderenends gegen einen Zugstab 33 abstützt. An dem Zugstab 33 ist eine Flügelmutter 35 vorgesehen, durch welche die Vorspannung der Spannfeder 31 eingestellt werden kann. Der Zugstab 33 ist mit seinem der Flügelmutter 35 abgewandten Ende fest mit dem Fahrzeug verbunden. Die Antriebswalze 21 erstreckt sich über die gesamte Breite des Fahrzeugs, während die nicht dargestellte Rolle, die mittels des Reibrads 23 von der Antriebswalze 21 antreibbar ist, nur so breit ist, wie die Anti-Rutsch-Matte 25. Es hat sich als vorteilhaft erwiesen, wenn beispielsweise vier Streifen von Anti-Rutsch-Matten 25 über die Breite des Fahrzeugs verteilt ausgelegt werden. Dadurch kann eine ausreichend große Rutschsicherheit gewährleistet werden, ohne den gesamten Boden 1 des Fahrzeugs mit einer Anti-Rutsch-Matte 25 bedecken zu müssen. In diesem Fall sind vier Reibräder 23 und vier Rollen mit jeweils einer Anti-Rutsch-Matte 25 über die Breite des Fahrzeugs angeordnet. Aller Reibräder 23 werden von einer Antriebswalze 21 angetrieben.

Die Anti-Rutsch-Matte 25 ist mit einem Haken 37 an einer Traverse 39 eingehängt, die bei aufgewickelter Anti-Rutsch-Matte 25 in einem Absatz 41 eines Heckabschlussbleches 43 des Fahrzeugs verschwindet.

Wenn die Anti-Rutsch-Matte 25 auf den Boden 1 des Fahrzeugs gelegt werden soll, wird die Traverse 39 etwas angehoben und auf den Boden 1 des Fahrzeugs aufgelegt. Diese Position der Traverse 39 ist in Figur 2 ebenfalls dargestellt. In der Traverse 39, die sich ebenfalls über die gesamte Breite des Fahrzeugs erstreckt, sind mehrere Rollen 45 vorgesehen, damit die Traverse 39 leicht über den Boden 1 des Fahrzeugs geführt werden kann.

In dem Heckabschlussblech 43 sind an den Ecken, über die die Anti-Rutsch-Matte 25 gezogen werden muss, Ablaufrollen 47 vorgesehen, damit die Anti-Rutsch-Matte 25 leichter von der Rolle (nicht dargestellt) abgewickelt werden kann und leichter auf diese aufgewickelt werden kann.

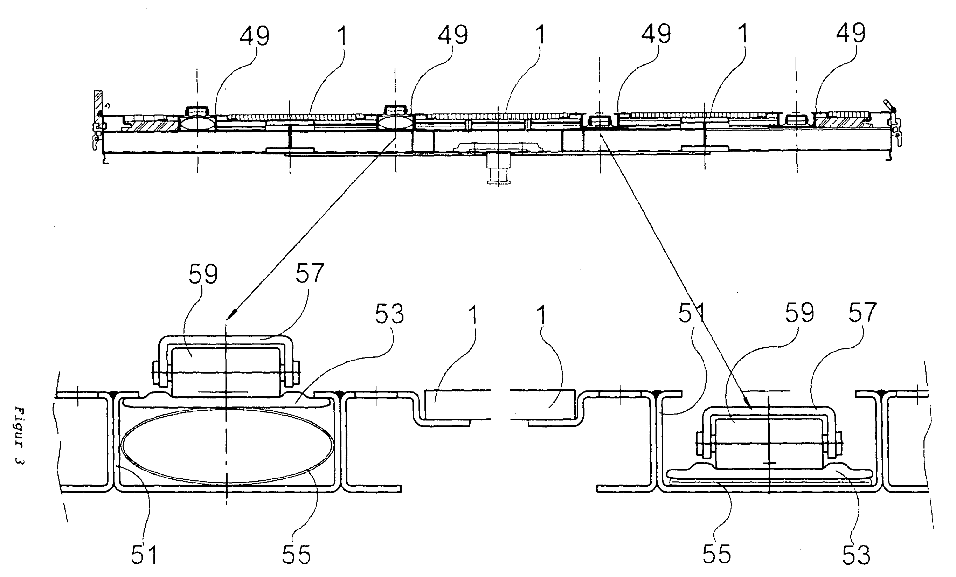

In Figur 3 ist ein Querschnitt durch den Boden 1 des Fahrzeugs gezeichnet, welcher über die Breite des Fahrzeugs verteilt vier Hubschienen 49 aufweist. Diese Hubschienen 49 bestehen im Wesentlichen aus einem C-Profil 51 in dem eine Tragplatte 53 und ein aufblasbarer Schlauch 55 angeordnet sind. In den zwei rechten Hubschienen 49 ist der Schlauch 55 nicht aufgeblasen, so dass die Tragplatte 53 auf dem Grund des C-Profils aufliegt. In den beiden linken Hubschienen von Figur 3 ist der Schlauch 55 aufgeblasen, so dass die Tragplatte 53 oben an dem C-Profil 51 anliegt.

Auf den Tragplatten 53 rollen Rollkörper 57 ab. Die Rollkörper 57 dienen dazu, zusammen mit den Hubschienen 49 die zu transportierende Ladung von der Laderampe (nicht dargestellt) in das Fahrzeug zu befördern. Dazu wird die Ladung auf einer Laderampe (nicht dargestellt), welche ebenso wie das Fahrzeug mit Hubschienen 49 ausgerüstet ist, abgesetzt, wenn der Schlauch 55 leer ist. In diesem Zustand können die Rollkörper 57 innerhalb des C-Profils 51 unter die Ladung geschoben werden. Anschließend wird der Schlauch 55 in den Hubschienen der Laderampe und dem Fahrzeug aufgeblasen und somit die Tragplatte 53 und mit ihr die Rollkörper 57 nach oben gegen die Ladung gepresst, bis die Ladung (nicht dargestellt) angehoben wird. Dieser Zustand ist beispielhaft auf der linken Seite des Bodens 1 in Figur 3 zu sehen. In diesem Zustand kann die Ladung mit Hilfe der Rollkörper 57, die mehrere hintereinander angeordnete nadelgelagerte Walzen 59 aufweisen, in das Fahrzeug geschoben werden. Selbstverständlich ist es dazu notwendig, dass die Hubschienen 49 des Fahrzeugs und die auf der Laderampe befestigten Hubschienen miteinander fluchten, so dass die Rollkörper 57 aus den Hubschienen in der Laderampe direkt in die Hubschienen des Fahrzeugs gerollt werden können. Das Fluchten der Hubschienen in der Laderampe (nicht dargestellt) und im Boden 1 des Fahrzeugs wird durch eine Andockvorrichtung (nicht dargestellt) gewährleistet. Sobald die Ware im Fahrzeug den gewünschten Platz erreicht hat, wird der Schlauch 55 entleert. Infolgedessen sinken die Tragplatte 53 und die Rollkörper 57 unter das Niveau des Bodens 1 ab und die Rollkörper 57 können unter der Ware in dem C-Profil herausgezogen werden.

Wenn nun die Ladung mit Hilfe der Rollkörper 57 und den Hubschienen 49 auf das Fahrzeug verladen werden soll, wird bei dem erfindungsgemäßen Fahrzeug zuvor die Traverse 39 aus ihrer Position in dem Absatz 41 des Heckabschlussblechs 43 herausgehoben und auf den Boden 1 beziehungsweise die Oberseite des Heckabschlussblechs 43 gelegt. Diese Position ist in Figur 2 auch dargestellt. Wenn nun die Rollkörper 57 mit der zu transportierenden Ware von der nicht dargestellten Rampe heckseitig in das Fahrzeug geschoben werden, schieben die Rollkörper 57 die Traverse 39 über den Boden 1 des Fahrzeugs und rollt somit automatisch die Anti-Rutsch-Matten 25 von der Rolle ab und legt sie auf dem Boden 1 des Fahrzeugs aus.

Wenn die Ware bis zur Stirnwand 13 des Fahrzeugs geschoben wird, werden entsprechend die Anti-Rutsch-Matten über die gesamte Länge des Fahrzeugs ausgelegt. Wenn die Ware in der Mitte des Fahrzeugs abgesetzt wird, wird die Anti-Rutsch-Matte 25 nur bis zur Mitte des Fahrzeugs ausgelegt. Auf jeden Fall ist immer gewährleistet, dass die gesamte geladene Ware auf einer Anti-Rutsch-Matte 25 steht, so dass die gewünschten hohen Haftreibungswerte zwischen Ware und Boden 1 erreicht werden. Damit ist die zu ladende Ware sicher gegen Verrutschen gesichert. Der bisher notwendige Aufwand zum Verlegen der Anti-Rutsch-Matten 25 entfällt bei dem erfindungsgemäßen Fahrzeug nahezu vollständig, da die Anti-Rutsch-Matte mit dem Beladen der Ware gleichzeitig und automatisch ausgelegt wird.

Wenn nach erfolgtem Transport die Ware wieder entladen wird und die Anti-Rutsch-Matte 25 wieder auf die Rolle aufgewickelt werden soll, wird die Antriebswalze 21 betätigt, welche über das Reibrad 23 die Anti-Rutsch-Matte 25 auf die Rolle aufwickelt, bis die Traverse 39 wieder ihren Platz in dem Absatz 41 des Heckabsatzblechs 43 eingenommen hat.

Anhand der Figur 4 wird eine weitere Einrichtung zur Sicherung der Ladung beschrieben. Im linken Teil der Figur 4 wird das Detail Z aus der Figur 1, welches eine Runge 13 mit einer Ausnehmung 17 zeigt, vergrößert dargestellt. Aus der Darstellung des Details Z ist ersichtlich, dass seitlich an die Rungen 13 Einstecklatten 15 in an sich bekannter Weise eingehängt werden können. In der Mitte der Runge weist diese eine oder mehrere Ausnehmungen 17 auf, in die ein Haken 61 einhängbar ist.

In dem Detail Z ist der Haken 61 in zwei verschiedenen Positionen dargestellt. In der oberen dargestellten Position kann der Haken 61 in die Ausnehmung 17 der Runge eingeführt werden. Anschließend wird der Haken 61, der fest mit einer Plane 63 des Fahrzeugs verbunden ist, nach unten gezogen, indem die Plane 63 durch Spanngurte (nicht dargestellt) an ihrem unteren Ende nach unten gespannt wird. In dieser Position greift der Haken 63 in die Runge 13 ein, so dass eine formschlüssige Verbindung zwischen Plane 63 und Runge 13 entsteht. Dies bedeutet, dass seitlich nach außen rutschende Ladung die Plane 63 nicht mehr von der Runge 13 wegdrücken kann und die von der verrutschenden Ladung auf die Plane 63 übertragenen Kräfte in die Runge 13 eingeleitet werden. Dadurch wird die Sicherungsfunktion der sehr reißfesten Plane 63 unterstützt, so dass wenn die Ladung verrutschen oder Kippen sollte, die Ladung von der Plane 63 zurückgehalten wird und somit die Plane 63 eine Ladungssicherungsfunktion hat.

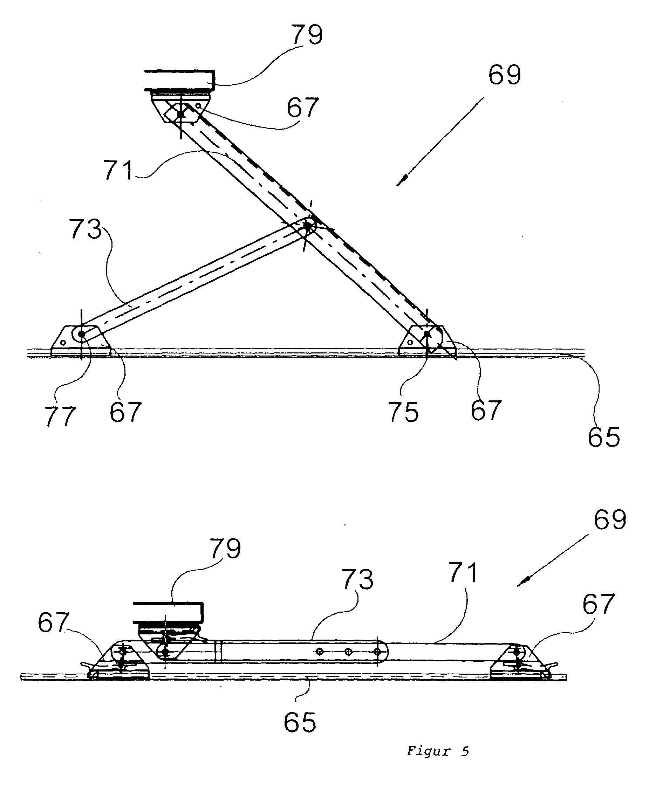

Links unten in Figur 4 ist ein Schnitt durch eine Runge 13 mit einem eingehängten Haken 61 dargestellt. Es versteht sich von selbst, dass die Ausnehmung 17 an der äußeren Seite der Runge, die der Plane 63 zugewandt ist, angeordnet ist. An der Innenseite der Runge 13 ist eine Zurrschiene 65 dargestellt mit einem Führungskopf 67 befestigt, die nachfolgend anhand der Figuren 5 - 7 noch im Detail erläutert werden.

Zwischen dem Haken 61 und der Plane 63 empfiehlt es sich, ein Verstärkungselement 68, beispielsweise aus einem Aluminiumprofil, vorzusehen, dass sich in vertikaler Richtung vom untersten Haken 61 bis zum obersten Haken 61 erstreckt und fest mit der Plane 63 verbunden ist, so dass die Plane 63 in vertikaler Richtung versteift wird. Um genügend Bewegungsfreiheit zum Ausheben der Haken 61 aus den Ausnehmungen 17 zu haben, ist am oberen Ende des Verstärkungselements 68 bis zur Oberkante der Plane 63 oder bis zu einer in der Schiene 11 (siehe Fig. 1) geführten Rolle (nicht dargestellt) ein elastisches Element, insbesondere ein Stück Gurtband, vorgesehen.

Dadurch ist es möglich, die Haken 61 aus den Ausnehmungen 17 herauszuheben, indem unten an der Plane 63 ein Griff oder eine Schlaufe befestigt wird und die Plane 63 an dieser Stelle durch Anheben des Griffs oder der Schlaufe (nicht dargestellt) im Bereich der Runge 13 angehoben wird. Alternativ können die Haken 61, durch einen Spanngurt (nicht dargestellt, der die Plane 63 nach oben anheben kann, aus den Ausnehmungen 17 herausgehoben werden.

Sobald die Plane 63 so weit angehoben wurde, dass die Haken 61 keine formschlüssige Verbindung mehr mit der Ausnehmung 17 haben, kann die Plane 63 frei bewegt werden, was zum Beispiel dann notwendig ist, wenn von der Seite des Fahrzeugs Ladung auf das Fahrzeug gebracht werden soll.

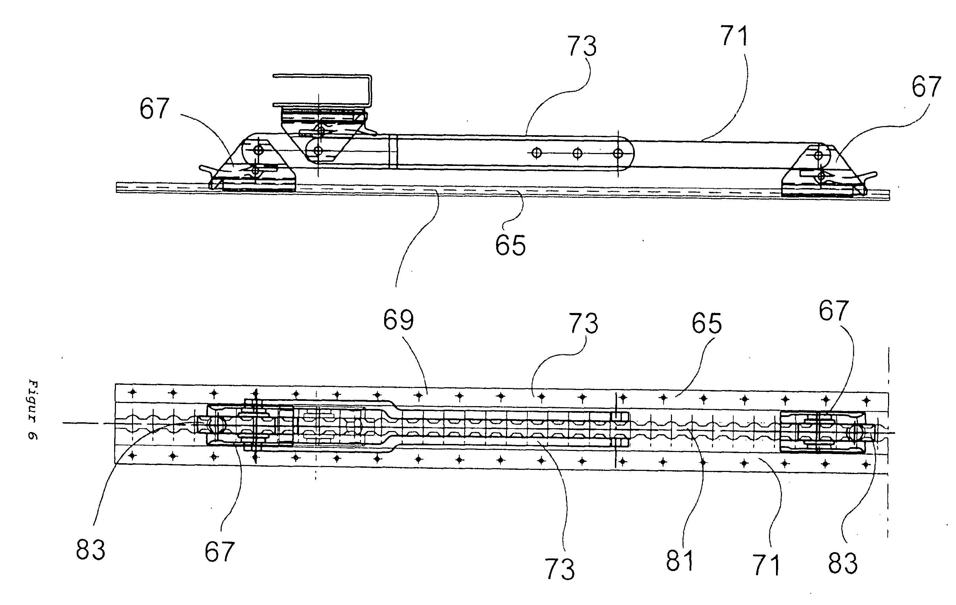

Anhand der Figuren 5 und 6 wird nachfolgend eine Vorrichtung zum Sichern von Ladung beschrieben. Die Vorrichtung, welche in ihrer Gesamtheit mit dem Bezugszeichen 69 versehen wird, umfasst einen Schwenkarm 71 und einen Stützarm 73.

Der Schwenkarm hat an seinem ersten Ende einen Drehpunkt 75 in einem Führungskopf 67. Der Drehpunkt 77 des Stützarms 73 ist ebenfalls in einem Führungskopf 67. Die Führungsköpfe 67, in denen der Schwenkarm 71 und der Stützarm 73 drehbar gelagert sind, sind in einer Zurrschiene 65 geführt und können dort in nahezu jeder beliebigen Position arretiert werden. Durch Ändern des Abstandes zwischen dem Drehpunkt 75 des Schwenkarms 71 und dem Drehpunkt 77 des Stützarms 73 kann der Schwenkarm 71 in jede beliebige gewünschte Position geschwenkt werden.

An dem dem Drehpunkt 75 entgegengesetzten Ende des Schwenkarms 71 ist ein Aufnahmestück 79 vorhanden, das bei dem in Figur 5 gezeigten Ausführungsbeispiel zur Aufnahme einer Einstecklatte 15 (nicht dargestellt, siehe Figur 1) geeignet ist. Das Aufnahmestück 79 ist auch drehbar im Schwenkarm 71 gelagert, so dass es verschiedene Winkelstellungen relativ zum Schwenkarm 71 annehmen kann.

In Figur 5 ist die erfindungsgemäße Vorrichtung 69 zum Sichern von Ladung in zwei verschiedenen Positionen dargestellt. Im unteren Teil von Figur 5 ist die Vorrichtung 69 in eingeklapptem Zustand dargestellt. Dies bedeutet, dass das Aufnahmestück 79 sich in unmittelbarer Nähe der Zurrschiene 65 befindet. Der Schwenkarm 71 und der Stützarm 73 verlaufen in dieser Position parallel.

Im oberen Teil der Figur 5 beträgt der Winkel zwischen Zurrschiene 65 und Schwenkarm 71 etwa 60 °. Infolgedessen ist der Abstand zwischen der Zurrschiene 65 und dem Aufnahmestück 79 beträchtlich größer als bei der im unteren Teil von Figur 5 gezeigten Position. Wenn nun der Schwenkarm 71 so weit verschwenkt wird, dass das Aufnahmestück 79 in Anlage an die zu sichernde Ware (nicht dargestellt) kommt und anschließend die Führungsköpfe 67 des Schwenkarms 71 und des Stützarms 73 in der Zurrschiene 65 arretiert werden, ist die Ladung (nicht dargestellt) sicher gegen Verrutschen und/oder Kippen gesichert.

In der Figur 6 sind die erfindungsgemäße Vorrichtung 69 sowie die Zurrschiene 65 noch etwas detaillierter dargestellt. Aus dieser Darstellung ergibt sich, dass der Stützarm 73 zweiteilig ausgeführt ist und an beiden Seiten des Schwenkarms 71 je ein Teil des Stützarms 73 vorhanden ist. Dadurch wird die Vorrichtung 69 stabiler und belastbarer.

Die Zurrschiene 65 weist in der Mitte eine Nut 81 mit einer Vielzahl von aneinandergereihten Kreisausschnitten auf. In diese Kreisausschnitte können Zapfen 83 der Führungsköpfe einrasten, so dass die Führungsköpfe 67 in der Zurrschiene 65 arretiert sind.

Zurrschienen 65 können in der Stirnwand 7, den Rungen 13, den Einstecklatten 15 und einem sogenannten Sperrbalken 85 des Fahrzeugs vorgesehen sein. Überall dort, wo eine Zurrschiene 65 vorhanden ist, kann die erfindungsgemäße Vorrichtung 69 zum Sichern von Ladung bei Bedarf angebracht werden und so eingestellt werden, dass die Ladung gegen Kippen und Verrutschen gesichert ist.

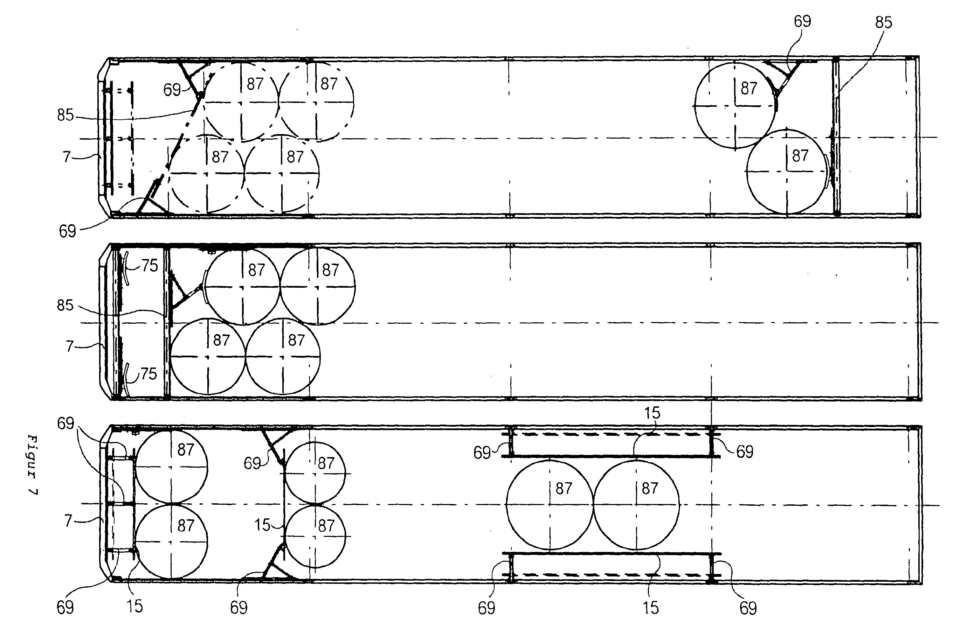

In Figur 7 sind drei Trailer in einer Ansicht von oben dargestellt, wobei die zu transportierende Ware, hier zylindrische Papierrollen, mit dem Bezugszeichen 87 versehen wurde. Aus dieser Ansicht von oben ist die Flexibilität des Einsatzes der erfindungsgemäßen Vorrichtung 69 zum Sichern von Ladung ersichtlich.

Egal wo die Ladung auf dem Boden 1 des Fahrzeugs abgesetzt wird, kann durch die erfindungsgemäße Vorrichtung 69 das Aufnahmestück 79 entweder direkt in Anlage an die zu sichernde Ware 87 in Anlage gebracht werden oder es kann mit Hilfe eines an zwei Vorrichtungen 69 befestigten Sperrbalkens 85 oder einer an zwei Vorrichtungen 69 befestigten Einstecklatte 15 die zu sichernde Ware 87 wirksam gegen Kippen und Verrutschen gesichert werden.

Bei dem Beispiel in der Mitte von Figur 7 sind die Aufnahmestücke 79 der Form der zu sichernden Ware angepasst, indem die Aufnahmestücke 75 die Form eines Kreisausschnittes haben.

## Patentansprüche

1. Fahrzeug zum Gütertransport mit einem Boden (1), mit mindestens einer Anti-Rutsch-Matte (25), wobei die mindestens eine Anti-Rutsch-Matte (25) auf eine Rolle aufwickelbar ist, und mit Mitteln zum Abrollen der Anti-Rutsch-Matte (25) auf den Boden (1).

2. Fahrzeug nach Anspruch 1, **dadurch gekennzeichnet, dass** die Rolle am Heck des Fahrzeugs angeordnet ist.

3. Fahrzeug nach Anspruch 1 oder 2, **dadurch gekennzeichnet, dass** die Rolle mit einem Reibrad (23) gekoppelt ist, und dass das Reibrad (23) gegen eine Antriebswalze (21) gepresst wird.

4. Fahrzeug nach Anspruch 3, **dadurch gekennzeichnet, dass** die Rolle und das Reibrad (23) an einem Schwenkhebel (27) drehbar befestigt sind, dass der Schwenkhebel (27) um eine Achse (29) schwenkbar ist.

5. Fahrzeug nach Anspruch 4, **dadurch gekennzeichnet, dass** eine Spannfeder (31) das Reibrad (23)gegen die Antriebswalze (21) presst, und dass sich die Spannfeder (31) einenends gegen den Schwenkhebel (27) und anderenends gegen einen Zugstab (33) abstützt.

6. Fahrzeug nach einem der vorhergehenden Ansprüche, **dadurch gekennzeichnet, dass** mehrere nebeneinander angeordnete Anti-Rutsch-Matten (25) vorgesehen sind, und dass die mehreren Anti-Rutsch-Matten durch eine Traverse (39) miteinander gekoppelt sind.

7. Fahrzeug nach einem der vorhergehenden Ansprüche, **dadurch gekennzeichnet, dass** die mindestens eine Anti-Rutsch-Matte (25) durch Einleiten einer Zugkraft in das Ende der mindestens einen Anti-Rutsch-Matte (25) abgewickelt wird.

8. Fahrzeug nach einem der vorhergehenden Ansprüche, **dadurch gekennzeichnet, dass** in den Boden (1) mindestens eine Hubschiene (49) mit einer anhebbaren Tragplatte eingelassen ist, und dass auf der Tragplatte (53) Rollkörper (57) abrollen können, dass in angehobenem Zustand der Tragplatte (53) die Ladung auf den Rollkörpern (57) in den Fahrzeug verladen werden kann, und dass in abgesenktem Zustand die Rollkörper (57) aus dem Fahrzeug herausgezogen werden können.

9. Fahrzeug nach Anspruch 10, **dadurch gekennzeichnet, dass** die Rollkörper (57) die Anti-Rutsch-Matte (25) abwickeln.

10. Fahrzeug nach einem der vorhergehenden Ansprüche, **dadurch gekennzeichnet, dass** im Heckbereich des Fahrzeugs mindestens eine Ablaufrolle (47) vorgesehen ist, und das die mindestens eine Anti-Rutsch-Matte (25) über die mindestens eine Ablaufrolle (47) abgewickelt und aufgewickelt wird.

11. Fahrzeug nach Anspruch 11, **dadurch gekennzeichnet, dass** die Rollkörper (57) über die Traverse (39) die zum Abwickeln der Anti-Rutsch-Matte (25) notwendigen Kräfte in diese einleiten.

12. Fahrzeug zum Gütertransport mit einem Boden (1), mit einem Dach (9), wobei in dem Dach (9) auf jeder Seite mindestens eine Schiene (11) zur Aufnahme einer Plane (63) vorgesehen ist, und mit Rungen (13), wobei die Rungen (13) das Dach (9) und den Boden (1) verbinden, **dadurch gekennzeichnet, dass** in den Rungen (13) mindestens eine Ausnehmung (17) vorhanden ist, dass an der Plane (63) mindestens ein Haken (61) befestigt ist, und dass der mindestens eine Haken (61) formschlüssig mit der mindestens einen Ausnehmung (17) der Runge (13) verbindbar ist.

13. Fahrzeug nach Anspruch 12, **dadurch gekennzeichnet, dass** an der Plane (63) Spanngurte vorgesehen sind, dass die Plane (63) mit den Spanngurten in Richtung des Bodens (1) gespannt werden kann, und dass die Spanngurte eine formschlüssige Verbindung zwischen dem mindestens einen Haken (61) der Plane (63) und der mindestens einen Ausnehmung (17) der Runge (13) herstellt.

14. Fahrzeug nach Anspruch 12 oder 13, **dadurch gekennzeichnet, dass** die Plane (63) dort wo der oder die Haken befestigt sind, lokal versteift (68) ist.

15. Fahrzeug nach einem der Ansprüche 12 bis 14, **dadurch gekennzeichnet, dass** zwischen der Oberkante der Plane (63) und dem obersten Haken (61) ein elastisches Element, insbesondere ein Gurtband mit Eigenelastizität, vorgesehen ist.

16. Fahrzeug nach einem der Ansprüche 12 bis 15, **dadurch gekennzeichnet, dass** an der Plane (63) eine Vorrichtung zum Anheben vorgesehen ist

17. Fahrzeug nach Anspruch 16, **dadurch gekennzeichnet, dass** die Vorrichtung zum Anheben als Handgriff oder Schlaufe ausgebildet ist.

18. Fahrzeug nach Anspruch 16, **dadurch gekennzeichnet, dass** die Vorrichtung zum Anheben als ein in Richtung des Daches wirkender Spanngurt ausgebildet ist.

19. Fahrzeug nach Anspruch 18, **dadurch gekennzeichnet, dass** im Bereich des Daches (9) eine Umlenkung des Spanngurts erfolgt, und dass ein festes Ende des Spanngurts am Boden (1) befestigbar ist.

20. Fahrzeug nach einem der Ansprüche 12 bis 19, **dadurch gekennzeichnet, dass** er die Merkmale der Ansprüche 1 bis 11 aufweist.

21. Vorrichtung zur Sicherung von Ladung, mit einem Schwenkarm (71) und mit einem Stützarm (73), wobei der Schwenkarm (71) und der Stützarm (73) an einem ersten Ende je einen Drehpunkt (75, 77) aufweist, wobei der Stützarm (73) zwischen dem Drehpunkt (75) und einem zweiten Ende des Schwenkarms (71) mit diesem gelenkig verbunden ist, und wobei der Abstand zwischen dem Drehpunkt (75) des Schwenkarms (71) und dem Drehpunkt (77) des Stützarms (73) veränderbar und arretierbar ist.

22. Vorrichtung nach Anspruch 21, **dadurch gekennzeichnet, dass** der Drehpunkt (75) des Schwenkarms (71) und der Drehpunkt (77) des Stützarms (73) in je einem Führungskopf (67) gelagert ist, und dass die Führungsköpfe (67) in einer Zurrschiene (65) verschiebbar und arretierbar sind.

23. Vorrichtung nach Anspruch 22, **dadurch gekennzeichnet, dass** mindestens eine Zurrschiene (65) an der Stirnwand (7) eines Fahrzeugs befestigt ist.

24. Vorrichtung nach Anspruch 22 oder 23, **dadurch gekennzeichnet, dass** mindestens eine Zurrschiene (65) an einer Runge (13), insbesondere einer Mittelrunge, eines Fahrzeugs befestigt ist.

25. Vorrichtung nach einem der Ansprüche 22 bis 24, **dadurch gekennzeichnet, dass** mindestens eine Zurrschiene (65) einem Sperrbalken (85) befestigt ist.

26. Vorrichtung nach Anspruch 25, **dadurch gekennzeichnet, dass** der Sperrbalken (85) mit seinen Enden an einer Einstecklatte (15) befestigt ist.

27. Vorrichtung nach Anspruch 26, **dadurch gekennzeichnet, dass** die Einstecklatten (15) je eine Zurrschiene (65) aufweisen, und dass der Sperrbalken (85) mit seinen Enden an den Zurrschienen (65) der Einstecklatten (15) verschiebbar und arretierbar befestigt ist.

28. Vorrichtung nach einem der Ansprüche 21 bis 27, **dadurch gekennzeichnet, dass** an dem dem Drehpunkt (75) gegenüberliegenden Ende des Schwenkarms (71) ein Aufnahmestück (79) vorgesehen ist.

29. Vorrichtung nach Anspruch 28, **dadurch gekennzeichnet, dass** das Aufnahmestück (79) drehbar an dem Schwenkarm (71) befestigt ist.

30. Vorrichtung nach Anspruch 28 oder 29, **dadurch gekennzeichnet, dass** die Form des Aufnahmestücks (79) der Form der zu sichernden Ware angepasst ist.

31. Vorrichtung nach Anspruch 30, **dadurch gekennzeichnet, dass** das Aufnahmestück (79) die Form eines Kreisausschnitts hat.

32. Vorrichtung nach Anspruch 31, **dadurch gekennzeichnet, dass** das Aufnahmestück (79) zur Aufnahme einer Einstecklatte (15) geeignet ist.
